# FASCICULE DE BREVET EUROPEEN

(11) **EP 2 031 289 B1**
(45) Date de publication et mention de la délivrance du brevet: **11.08.2010**
(21) Numéro de dépôt: 08290803.9
(22) Date de dépôt: 27.08.2008
(51) Int. Cl.: F16L 27/12, F16L 39/00

(54) **Dispositif de connexion pour circuit de climatisation ou de direction assistée de véhicule automobile, comprenant une bride et deux tubes la traversant**
Verbindungsvorrichtung für Klimaanlagen- oder Hilfslenkschaltkreis für Kraftfahrzeuge, die einen Flansch und zwei Rohre, die diesen durchdringenden, umfasst
Connection device for an air-conditioning or power-steering circuit of an automobile, comprising a flange and two pipes passing through it

(30) Priorité: 30.08.2007 FR 0706091
(43) Date de publication de la demande: 04.03.2009
(73) Titulaire: Hutchinson, 75008 Paris (FR)
(72) Inventeur: Menou, Pierre, 45200 Montargis (FR)
(74) Mandataire: Bolinches, Michel Jean-Marie

(56) Documents cités:
- EP-A- 1 669 652
- FR-A- 2 841 631
- US-A- 3 869 153
- US-A- 5 860 681
- US-A1- 2002 117 850

## Description

La présente invention concerne un dispositif de connexion pour un circuit de climatisation ou de direction assistée de véhicule automobile, le dispositif comprenant une bride de connexion et deux tubes ou embouts tubulaires qui sont adaptés pour être logés dans deux logements respectifs de la bride.

D'une manière générale, les circuits de climatisation et les circuits de direction assistée pour véhicules automobiles sont tous deux pourvus de dispositifs de connexion d'une paire de tubes ou d'embouts tubulaires à des orifices d'entrée/ sortie d'un organe de mise en mouvement du fluide circulant dans le circuit correspondant, tel qu'un compresseur ou une valve d'expansion thermique dans le cas d'un circuit de climatisation, ou bien tel qu'une électropompe dans le cas d'un circuit de direction assistée. De manière connue, ces dispositifs de connexion comportent essentiellement :
- une bride de connexion présentant en son centre un orifice pour sa fixation à l'organe du circuit correspondant,
- deux tubes de section circulaire qui sont logés dans deux logements traversants de la bride de part et d'autre de cet orifice de fixation, et qui sont chacun pourvus d'une collerette appuyant contre une face de butée de la bride pour leur maintien dans ces logements, et
- une pièce supplémentaire qui est adaptée pour bloquer en rotation l'un au moins de ces tubes dans le logement correspondant de la bride, pour compléter le maintien du tube par son indexage angulaire dans ce logement.

On peut par exemple citer, pour la réalisation de dispositifs de connexion incorporant une telle pièce supplémentaire d'indexage angulaire, le document US-A-5 860 681 dans lequel cette pièce est un insert coopérant avec un plat du tube formé en retrait de la collerette, et le document US-B-6 682 100 dans lequel cette pièce est une patte de verrouillage en U venant verrouiller par clipage le tube correspondant via des encoches formées dans ce dernier. Dans ces deux documents, la pièce supplémentaire de verrouillage en rotation coopère également avec la bride de sorte à fermer transversalement le logement correspondant.

On peut également citer d'autres types de dispositifs de connexion dans lesquels la pièce supplémentaire d'indexage doit être immobilisée par déformation du tube ou de cette même pièce, ou bien doit être brasée sur le tube concerné.

Un inconvénient majeur des dispositifs de connexion connus réside dans le nombre relativement élevé d'éléments nécessaires à cet indexage angulaire, qui est égal à quatre pour l'indexage d'un seul tube dans la bride (i.e. la bride, les deux tubes et la pièce d'indexage) et à cinq pour l'indexage de la paire de tubes dans cette bride (i.e. avec une seconde pièce d'indexage). Il en résulte que ces dispositifs de connexion sont relativement complexes à réaliser et, par conséquent, présentent un coût relativement élevé.

Un autre inconvénient de ces dispositifs de connexion connus réside dans l'impossibilité de faire coulisser axialement le tube une fois verrouillé en rotation par l'insert correspondant, comme cela est notamment visible dans le document US-B-6 682 100, ce qui ne permet pas d'engager l'un après l'autre les deux tubes dans leurs logements respectifs.

Un inconvénient supplémentaire de ces dispositifs de connexion connus réside dans la nécessité d'assembler la bride à la paire de tubes avant la connexion des extrémités de ces derniers à l'organe correspondant du circuit, ce qui peut être contraignant dans certaines configurations de connexion et qui, dans le cas où la bride n'est pas maintenue aux tubes pendant les opérations de connexion à l'organe considéré, peut nécessiter des précautions à prendre pour éviter que cette bride n'interfère avec ces opérations.

Un but de la présente invention est de proposer un dispositif de connexion pour un circuit de climatisation ou de direction assistée de véhicule automobile, le dispositif comprenant une bride de connexion et deux tubes aux extrémités de section circulaire qui sont adaptés pour être logés dans deux logements respectifs de la bride et qui sont chacun pourvus de moyens de mise en butée axiale du tube correspondant contre une face de butée de la bride destinée à être tournée vers ce circuit, l'un au moins des tubes, ou tube verrouillable, étant pourvu de moyens pour le bloquer en rotation dans le logement correspondant, ou logement de verrouillage, qui s'étendent en deçà des moyens de mise en butée et qui comprennent au moins un plat, dispositif qui remédie à ces inconvénients.

A cet effet, un dispositif de connexion selon l'invention est tel que ledit ou chaque plat se termine à une distance axiale (i.e. mesurée selon la direction axiale du ou de chaque tube verrouillable) desdits moyens de mise en butée, tels qu'une collerette périphérique, qui est inférieure à l'épaisseur axiale de la bride, et que ledit ou chaque plat coopère directement avec une face plate du logement de verrouillage correspondant qui est venue d'une seule pièce avec la bride, de sorte à bloquer en rotation le ou chaque tube verrouillable dans ce logement de verrouillage tout en autorisant son coulissement axial dans ce dernier.

Par « plat », on entendra de manière connue dans la présente description un tronçon plan façonné ou usiné sur une surface tubulaire initialement cylindrique de section circulaire, qui a pour effet de tronquer cette surface cylindrique en lui adjoignant, vu en section transversale, une corde rectiligne en lieu et place de l'arc de cercle correspondant.

Selon un exemple préférentiel de réalisation de l'invention, ledit ou chaque plat se prolonge axialement par lesdits moyens de mise en butée, de telle sorte que ladite distance séparant ce plat des moyens de mise en butée soit nulle ou sensiblement nulle.

En variante, ledit ou chaque plat peut se prolonger axialement par une portion de liaison qui est montée axialement au-delà de ladite face plate à l'intérieur d'une portion élargie dudit logement de verrouillage correspondant, et qui se prolonge par lesdits moyens de mise en butée. Dans ce cas, ladite distance séparant ce plat des moyens de mise en butée n'est pas choisie nulle, étant précisé que cette distance axiale est relativement réduite du fait qu'elle doit être toujours strictement inférieure à l'épaisseur de la bride.

Dans l'un ou l'autre cas (i.e. sans ou avec portion de liaison impliquant respectivement une continuité ou discontinuité axiale du ou de chaque plat vis-à-vis des moyens de mise en butée du tube correspondant contre la bride), on notera que c'est la valeur bornée telle que définie ci-dessus de ladite distance d avec 0 ≤ d < e (où e est l'épaisseur de la bride) - i.e. la formation du ou de chaque plat au plus près des moyens de mise en butée - qui permet de se passer de pièce supplémentaire pour ce blocage en rotation du ou de chaque tube dans la bride, et donc de ne réaliser la connexion qu'au moyen des deux seuls tubes ou embouts tubulaires et de la bride de connexion monobloc les recevant.

En d'autres termes, le dispositif de connexion selon l'invention peut être exclusivement constitué de trois pièces formées respectivement par la bride et les deux tubes qui y sont insérés, que l'on ait un ou deux tubes verrouillables en rotation, via le(s) plat(s) que l'un d'entre eux ou chacun d'eux incorpore. Le coût global de l'opération de connexion est ainsi fortement réduit, en comparaison de celui de l'art antérieur requérant des pièces supplémentaires pour le verrouillage des tubes en rotation.

On notera également que le coulissement axial (i.e. perpendiculairement à ladite face de butée de la bride) du ou de chaque tube verrouillé dans son logement de verrouillage qui est obtenu grâce au ou à chaque plat précité permet de monter les deux tubes à travers la bride séparément et l'un après l'autre, et que l'indexation angulaire du ou de chaque tube qui est obtenue par ce verrouillage demeure inchangée suite à son coulissement axial.

Selon une autre caractéristique de l'invention, ledit ou chaque plat s'étend avantageusement sur une portion du ou de chaque tube verrouillable de longueur axiale supérieure à l'épaisseur axiale de la bride, pour autoriser le coulissement précité.

A titre préférentiel, ledit ou chaque plat s'étend sur une portion du ou de chaque tube verrouillable de longueur axiale qui est supérieure à la somme, d'une part, de l'épaisseur axiale de la bride et, d'autre part, de la longueur axiale d'une partie arrière de l'autre tube s'étendant au-delà des moyens de mise en butée correspondants et jusqu'à l'extrémité arrière de connexion de cet autre tube. Cette condition préférentielle permet en effet d'optimiser l'engagement par coulissement des deux tubes l'un après l'autre à travers la bride et l'indexation angulaire précitée du ou de chaque tube verrouillable lors de sa connexion.

Selon un exemple de réalisation de l'invention, ladite portion du ou de chaque tube peut présenter un seul plat longitudinal qui présente une largeur transversale sensiblement égale au diamètre du reste du tube correspondant et qui se termine au plus près (i.e. à ladite distance nulle ou pas) d'une collerette périphérique du tube correspondant formant lesdits moyens de mise en butée et, comme indiqué ci-dessus, ce plat coopère directement avec ladite face plate du logement de verrouillage correspondant.

En variante et à titre préférentiel, ladite portion peut présenter au moins deux plats longitudinaux parallèles qui sont axialement séparés par ladite distance de cette collerette périphérique, et qui coopèrent directement avec deux faces plates respectives du logement de verrouillage correspondant, lequel présente une section transversale sensiblement rectangulaire à l'instar de ladite portion.

Selon une autre caractéristique de l'invention, ledit ou chaque plat est formé d'un seul tenant par façonnage avec le reste du ou de chaque tube verrouillable, qui présente une section transversale globalement circulaire, ledit ou chaque plat coopérant exclusivement avec ladite ou chaque face plate du logement de verrouillage correspondant.

On notera que cette opération de façonnage du ou de chaque plat de manière, d'une part, qu'il s'étende sur une longueur axiale supérieure à la profondeur du logement de verrouillage correspondant (en pratique également supérieure à l'épaisseur de la bride) et, d'autre part, qu'il se termine précisément à la collerette périphérique (dans le cas préférentiel où ladite distance est nulle) sans présenter de zone de transition ovalisée avec cette collerette, est relativement difficile à réaliser du fait de la proximité immédiate de cette collerette, étant précisé que le façonnage du ou de chaque plat serait bien plus facile à réaliser à ladite distance non nulle de la collerette ou, à plus forte raison, à une distance plus importante de cette collerette comme cela est par exemple le cas dans le document précité US-A-5 860 681.

Selon une autre caractéristique de l'invention, le ou chaque logement de verrouillage est avantageusement ouvert sur un chant périphérique de la bride à la manière d'une entaille transversale formée dans ledit chant, de telle sorte que le ou chaque tube verrouillable soit mobile transversalement le long du logement de verrouillage correspondant.

Selon un premier mode de réalisation de l'invention, l'un des deux tubes est un tube verrouillable via les moyens de blocage en rotation précités coopérant avec le logement de verrouillage, et l'autre tube est un embout tubulaire qui coopère avec l'autre logement, de section circulaire fermée, via des crans angulaires obtenus par des nervures axiales formées sur cet autre tube et coopérant avec des rainures axiales formées sur cet autre logement, ou vice versa.

De cette manière, on peut monter ces deux tubes à travers la bride séparément et l'un après l'autre, comme indiqué précédemment.

Selon un second mode de réalisation de l'invention, la bride présente deux logements de verrouillage sensiblement homothétiques et par exemple symétriques l'un de l'autre par rapport au centre de la bride (i.e. identiques dans cet exemple, avec un rapport d'homothétie de -1) qui sont chacun formés par ladite entaille et qui sont aptes à recevoir les deux tubes de verrouillage incorporant chacun les plats précités à ladite distance (nulle ou pas) de ladite collerette, de sorte à présenter sensiblement une forme de « H » dont les logements s'étendent de part et d'autre de la barre de liaison du « H ».

On notera que ce second mode selon l'invention présente comme avantage essentiel le fait de ne devoir assembler la bride aux tubes qu'à la fin des opérations de connexion du dispositif à l'organe considéré, via la paire d'entailles transversales formées dans cette bride, ce qui représente une commodité accrue pour ces opérations de connexion et également une économie potentielle pour le coût de la réalisation de la connexion.

Avantageusement, cette bride selon ce second mode peut être formée d'un extrudat métallique, les deux logements de verrouillage qu'elle présente étant alors venus d'extrusion avec le reste de la bride.

Selon une autre caractéristique préférentielle de ce second mode de l'invention, chacun des deux jambages du « H » formé par ladite bride présente deux extrémités qui peuvent être déformées de manière variable en étant localement recourbées vers l'autre jambage, de sorte à permettre un calage transversal plus ou moins serré des deux tubes verrouillables dans leurs logements respectifs.

On notera qu'il est ainsi possible de solidariser la bride selon ce second mode avec les deux tubes tout en tolérant des mouvements relatifs de ces derniers tant dans la direction axiale que dans la direction transversale (rapprochement ou écartement relatif entre les tubes).

D'autres caractéristiques, avantages et détails de la présente invention ressortiront à la lecture de la description suivante d'un exemple de réalisation de l'invention, donné à titre illustratif et non limitatif, ladite description étant réalisée en référence avec les dessins joints, parmi lesquels :
la figure 1 est une vue en perspective et en transparence d'un dispositif de connexion selon le premier mode de réalisation de l'invention, dans lequel seul le tube verrouillable en rotation est monté dans la bride,
la figure 2a est une vue en perspective et en transparence d'une variante selon l'invention du dispositif de connexion de la figure 1,
la figure 2b est une vue en section axiale selon le plan IIb-IIb du dispositif de connexion de la figure 2a,
la figure 3 est une vue en perspective et en transparence du dispositif de connexion de la figure 1 montrant la face de la bride qui est opposée à la connexion à réaliser, dans lequel les deux tubes sont montés dans la bride,
la figure 4 est une vue en perspective et en transparence du dispositif de la figure 3 montrant la face de butée de la bride contre laquelle sont montés en appui les tubes et qui est tournée vers la connexion à réaliser,
la figure 5 est une vue schématique en perspective d'un dispositif de connexion selon le second mode de réalisation de l'invention, dans lequel les deux tubes verrouillables en rotation sont montés dans la bride,
la figure 5a est une vue schématique en section transversale de la bride selon le second mode de l'invention illustré à la figure 5,
la figure 5b est une vue schématique en section transversale de la bride selon une première variante de réalisation de la figure 5a,
la figure 6 est une vue schématique en perspective d'une seconde variante selon l'invention du dispositif de connexion de la figure 5, et
la figure 6a est une vue schématique en section transversale de la bride selon cette seconde variante de la figure 6.

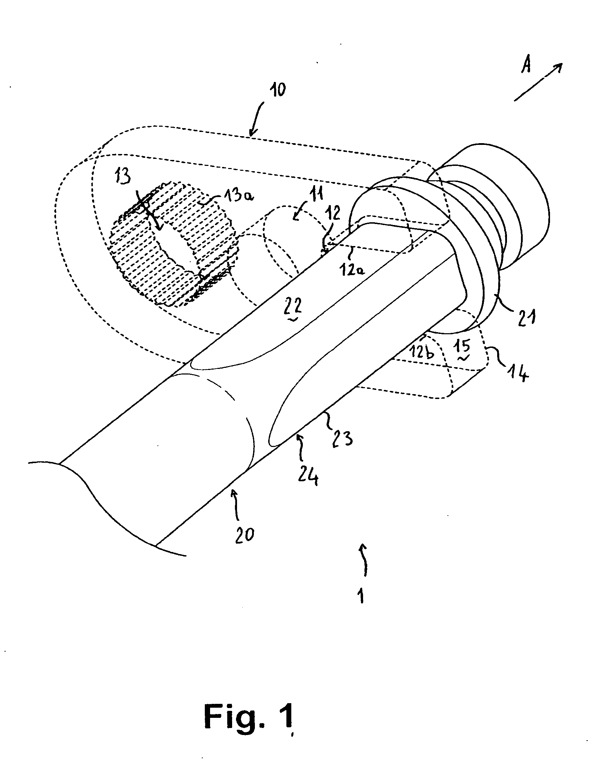

Le dispositif de connexion 1 selon le premier mode de réalisation de l'invention illustré à la figure 1 est exclusivement constitué :
- d'une bride de connexion 10 présentant en son centre un orifice 11 pour sa fixation à un organe d'un circuit de climatisation ou de direction assistée de véhicule automobile, et
- de deux tubes 20 et 30 globalement de section circulaire qui sont respectivement logés dans deux logements traversants 12 et 13 de la bride 10 de part et d'autre de l'orifice 11 et qui sont chacun pourvus d'une collerette 21, 31 de butée appuyant contre une face de butée 14 de la bride 10 pour leur maintien dans ces logements 12 et 13.

Plus précisément, l'un de ces deux tubes 20, verrouillable en rotation dans la bride 10, présente à cet effet deux plats longitudinaux 22 et 23 parallèles qui présentent chacun une largeur transversale sensiblement égale au diamètre du tube 20 en deçà de ces plats 22 et 23 et qui se terminent axialement au ras de la collerette 21, ces deux plats 22 et 23 coopérant directement avec les deux faces plates parallèles 12a et 12b d'un logement de verrouillage 12 de ce tube 20 qui est formé par une entaille transversale pratiquée en un bord latéral du chant 15 de la bride 10, de sorte que cette dernière présente sensiblement une forme de « C ». Dans l'exemple de la figure 1, ces deux faces plates 12a et 12b s'étendent de manière continue sur toute la profondeur axiale du logement 12 (i.e. jusqu'à la face de butée 14 de la bride 10).

Comme illustré notamment à la figure 1, ce logement 12 présente une section transversale sensiblement rectangulaire, à l'instar de celle de la portion 24 du tube 20 présentant les deux plats 22 et 23. Il en résulte que ce tube 20 est verrouillé en rotation (i.e. indexé angulairement), via sa portion 24, dans le logement 12 de la bride 10 tout en étant mobile en coulissement axial à travers ce logement 12 dans le sens de la flèche A.

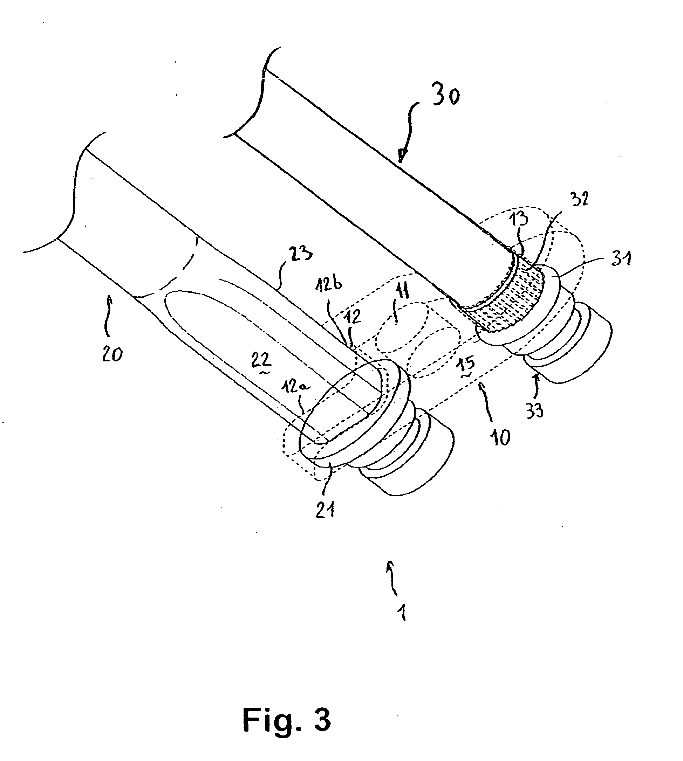

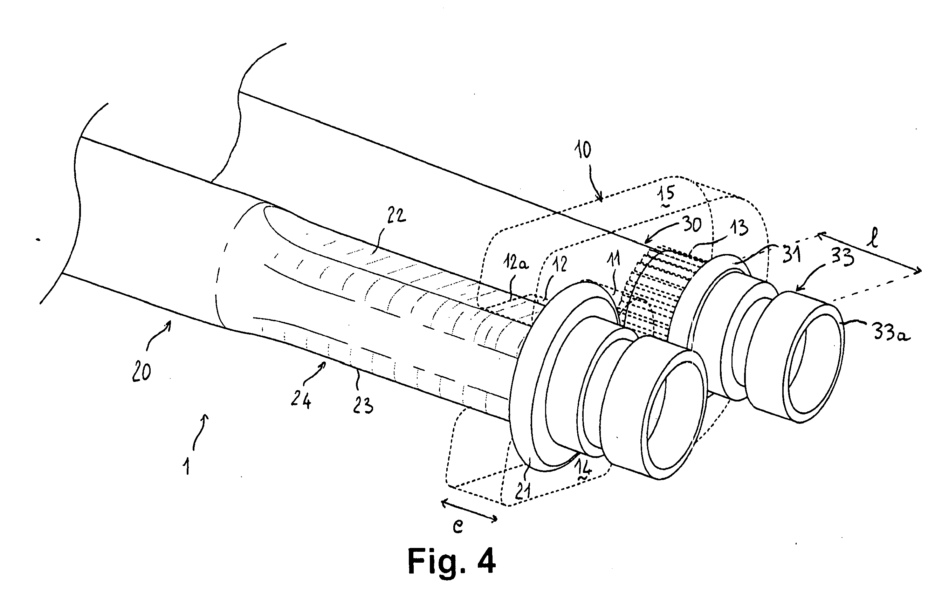

Quant à l'autre tube 30 (visible aux figures 3 et 4), il coopère dans cet exemple de réalisation avec l'autre logement 13, de section circulaire fermée, via des crans angulaires obtenus par des nervures axiales 32 formées sur ce tube 30 en deçà de la collerette 31 et coopérant avec des rainures axiales 13a formées de manière traversante sur cet autre logement 13.

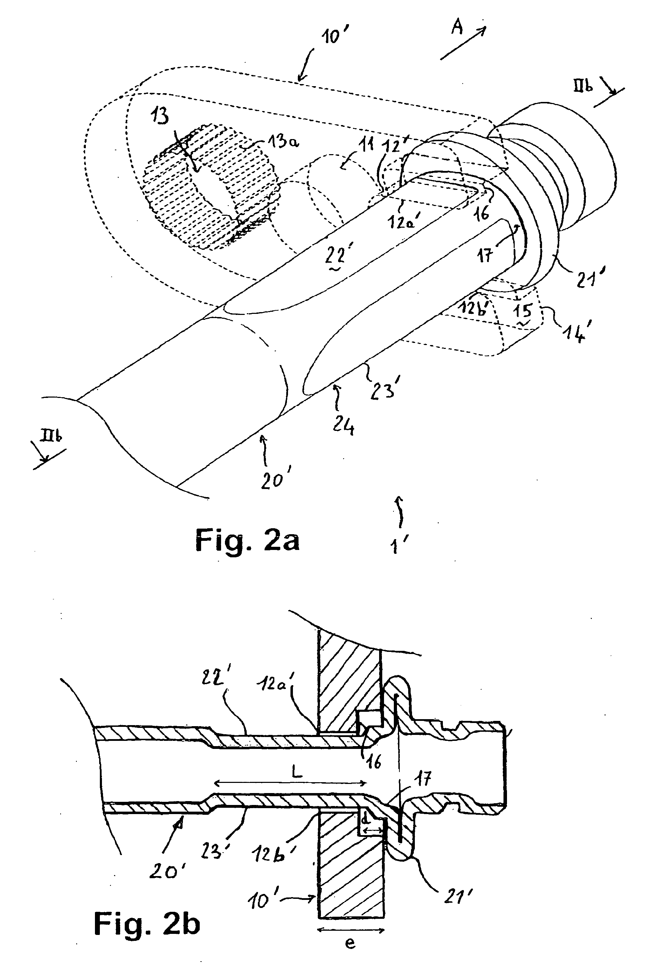

Dans la variante de ce premier mode de l'invention illustrée aux figures 2a et 2b, on a utilisé les mêmes références numériques pour désigner les éléments identiques du dispositif de connexion 1 de la figure 1, et l'on a ajouté le signe «'» aux références de cette figure désignant des éléments de forme différente.

Le dispositif de connexion 1' des figures 2a et 2b se différencie uniquement de celui de la figure 1, en ce que les deux plats 22' et 23' du tube verrouillable 20' se terminent non pas au ras de la collerette 21 du tube 20', mais à une distance axiale d de cette dernière qui est choisie inférieure à l'épaisseur axiale e de la bride 10', et en ce que les deux faces plates 12a' et 12b' avec lesquelles coopèrent ces plats 22' et 23' ne s'étendent pas jusqu'à la face de butée 14' de la bride 10', mais sont reliées à cette face 14' par un épaulement 16 qui forme un élargissement du logement de verrouillage 12' et qui reçoit avec jeu une portion de liaison 17 du tube 20' reliant les plats 22' et 23' à la collerette 21'.

Plus précisément, on voit aux figures 2a et 2b que cette portion de liaison 17 présente une surface tronconique puis cylindrique analogue à celle que présente le tube 20' en deçà des plats 22' et 23', et qu'elle s'étend sur la distance axiale d nettement inférieure à l'épaisseur e de la bride 10'.

Comme indiqué précédemment, l'utilisation du tube 20 ou 20' verrouillable en rotation et de la bride 10 ou 10' selon ce premier mode de l'invention permet avantageusement d'assembler les deux tubes 20 ou 20' et 30 séparément et l'un après l'autre, au cours de l'opération de connexion du dispositif 1 au circuit considéré.

On notera en outre qu'en référence aux dispositifs de connexion 1, 1' selon l'invention des figures 1 à 4, les plats 22 et 23 ou 22' et 23' s'étendent de préférence sur une longueur axiale L supérieure à la somme de l'épaisseur e de la bride 10, 10' et de la longueur axiale I d'une partie arrière 33 du tube 30 comprise entre la collerette 31 et l'extrémité de connexion 33a de ce tube 30. Cette condition dimensionnelle préférentielle favorise l'engagement de l'extrémité 33a du tube 30 tout en garantissant que celle de l'autre tube 20, 20' ne soit pas engagée dans le logement de connexion correspondant, la présence des plats 22 et 23, 22' et 23' garantissant l'indexation angulaire précitée.

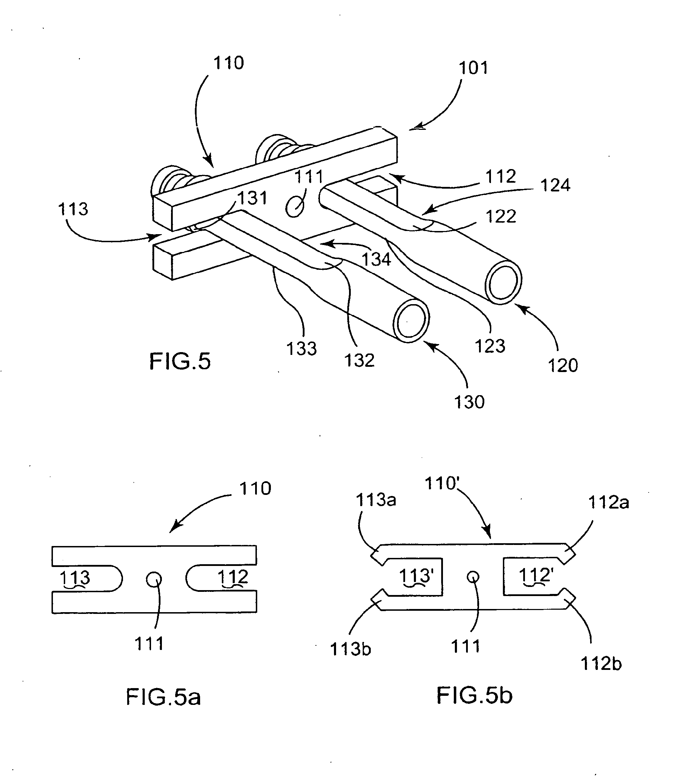

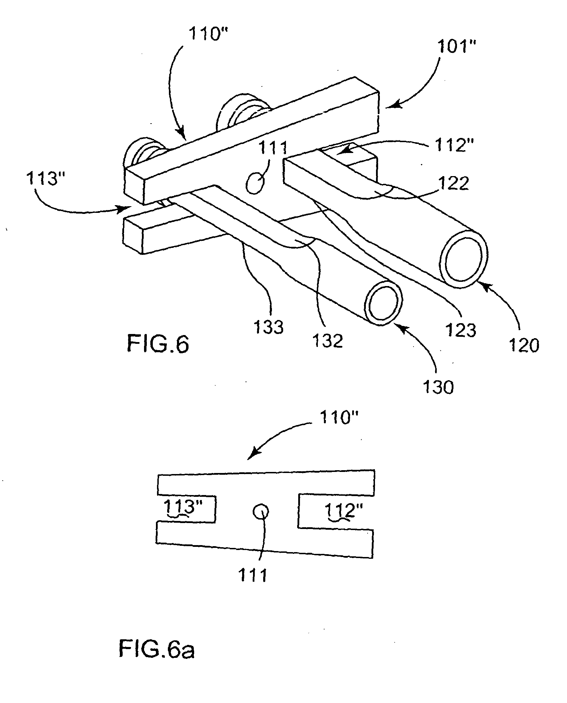

Dans les deux variantes de ce second mode de l'invention illustrées, d'une part, à la figure 5b et, d'autre part, aux figures 6 et 6a, on a utilisé les mêmes références pour désigner les éléments inchangés du dispositif de connexion 1 des figures 5 et 5a, et l'on a ajouté à chaque fois le signe «'» aux références de ces figures 5 et 5a désignant des éléments de forme différente.

Le dispositif de connexion 101 selon le second mode de réalisation de l'invention illustré aux figures 5 et 5a se différencie essentiellement de celui des figures 1 à 4, en ce que chacun des deux tubes 120 et 130 (et non pas un seul tube 20 ou 20' comme dans le premier mode) présente une portion 124, 134 à deux plats longitudinaux parallèles 122, 123 et 132, 133 permettant son verrouillage en rotation dans un logement 112, 113 de la bride 110 (analogue au logement de verrouillage 12 du premier mode).

Comme visible à la figure 5, la bride 110 présente ainsi dans cet exemple deux logements ouverts identiques 112 et 113 en forme d'entailles transversales qui sont symétriques l'une de l'autre par rapport à l'orifice de fixation 111 de la bride 110 et qui sont aptes à recevoir les deux tubes de verrouillage 120 et 130 incorporant chacun les deux plats 122, 123 et 132, 133 qui se terminent à ladite distance nulle ou pas de la collerette correspondante 131 (la collerette du tube 120 n'étant pas visible), de sorte à présenter sensiblement une forme de « H ».

Avantageusement, cette bride 110 est formée d'un extrudat métallique et, comme illustré à la figure 5b, les deux extrémités latérales 112a, 112b et 113a, 113b de chaque logement 112' et 113' de la bride 110' selon cette variante de réalisation peuvent être déformées en étant plus ou moins localement recourbées l'une vers l'autre, de sorte à permettre un calage transversal plus ou moins serré des deux tubes verrouillables 120 et 130 dans leurs logements respectifs 112' et 113', en plus du coulissement axial précité de ces deux tubes 120 et 130.

Le dispositif de connexion 101" des figures 6 et 6a se différencie uniquement de celui des figures 5 et 5a, en ce que la bride 110" présente deux logements de verrouillage 112" et 113" homothétiques et non symétriques l'un de l'autre par rapport à l'orifice de fixation 111 de la bride 110". Quant aux tubes 120 et 130, ils sont dans cet exemple du même type que ceux de la figure 5.

Comme indiqué ci-dessus, ce second mode selon l'invention permet de ne devoir assembler la bride 110, 110', 110" aux tubes 120 et 130 qu'à la fin des opérations de connexion du dispositif 101, 101', 101" au circuit considéré, via les deux logements 112 et 113, 112' et 113', 112" et 113" ouverts latéralement.

## Revendications

1. Dispositif de connexion (1, 1', 101, 101 ") pour un circuit de climatisation ou de direction assistée de véhicule automobile, le dispositif comprenant une bride de connexion (10, 10', 110, 110', 110") et deux tubes (20, 20' et 30, 120 et 130) aux extrémités de section circulaire qui sont adaptés pour être logés dans deux logements respectifs (12, 12' et 13, 112 et 113, 112' et 113', 112" et 113") de la bride et qui sont chacun pourvus de moyens de mise en butée axiale (21, 21' et 31, 131) du tube correspondant contre une face de butée (14, 14') de la bride destinée à être tournée vers ce circuit, l'un au moins des tubes, ou tube verrouillable (20, 20', 120, 130), étant pourvu de moyens pour le bloquer en rotation dans le logement correspondant, ou logement de verrouillage (12, 12', 112, 113, 112', 113', 112", 113"), qui s'étendent en deçà des moyens de mise en butée et qui comprennent au moins un plat (22, 23, 22', 23', 122, 123, 132, 133), dans lequel ledit ou chaque plat se termine à une distance (d) desdits moyens de mise en butée qui, mesurée selon la direction axiale du ou de chaque tube verrouillable, est inférieure à l'épaisseur axiale (e) de la bride, **caractérisé en ce que** ledit ou chaque plat coopère directement avec une face plate (12a, 12b, 12a', 12b') du logement de verrouillage correspondant qui est venue d'une seule pièce avec la bride, de sorte à bloquer en rotation le ou chaque tube verrouillable dans ce logement de verrouillage tout en autorisant son coulissement axial dans ce dernier.

2. Dispositif de connexion (1, 101, 101") selon la revendication 1, **caractérisé en ce que** ledit ou chaque plat (22, 23, 122, 123, 132, 133) se prolonge axialement par lesdits moyens de mise en butée (21, 131), de telle sorte que ladite distance (d) soit nulle ou sensiblement nulle.

3. Dispositif de connexion (1') selon la revendication 1, **caractérisé en ce que** ledit ou chaque plat (22', 23') se prolonge axialement par une portion de liaison (17) qui est montée axialement au-delà de ladite face plate (12a', 12b') à l'intérieur d'une portion élargie dudit logement de verrouillage (12') correspondant, et qui se prolonge par lesdits moyens de mise en butée (21').

4. Dispositif de connexion (1, 1', 101, 101") selon une des revendications précédentes, **caractérisé en ce que** ledit ou chaque plat (22, 23, 22', 23', 122, 123, 132, 133) s'étend sur une portion (24, 124, 134) du ou de chaque tube verrouillable (20, 20', 120, 130) de longueur axiale (L) supérieure à l'épaisseur axiale (e) de la bride (10, 10', 110, 110', 110").

5. Dispositif de connexion (1, 1', 101, 101") selon la revendication 4, **caractérisé en ce que** ledit ou chaque plat (22, 23, 22', 23', 122, 123, 132, 133) s'étend sur une portion (24, 124, 134) du ou de chaque tube verrouillable (20, 20', 120, 130) de longueur axiale (L) qui est supérieure à la somme, d'une part, de l'épaisseur axiale (e) de la bride (10, 10', 110, 110', 110") et, d'autre part, de la longueur axiale (l) d'une partie arrière (33) de l'autre tube (30) s'étendant au-delà desdits moyens de mise en butée (31, 131) et jusqu'à l'extrémité arrière de connexion (33a) de cet autre tube.

6. Dispositif de connexion (1, 1', 101, 101") selon une des revendications précédentes, **caractérisé en ce que** ladite portion (24, 124, 134) présente au moins deux plats longitudinaux parallèles (22 et 23, 22' et 23', 122 et 123, 132 et 133) qui sont axialement séparés, par ladite distance (d), d'une collerette périphérique (21, 21', 131) formant lesdits moyens de mise en butée du ou de chaque tube verrouillable (20, 20', 120, 130), et qui coopèrent directement avec deux faces plates respectives (12a et 12b, 12a' et 12b') du logement de verrouillage (12, 12', 112, 113, 112', 113', 112", 113") correspondant, lequel présente une section transversale sensiblement rectangulaire à l'instar de ladite portion.

7. Dispositif de connexion (1, 1', 101, 101") selon une des revendications précédentes, **caractérisé en ce que** ledit ou chaque plat (22, 23, 22', 23', 122, 123, 132, 133) est formé d'un seul tenant par façonnage avec le reste du ou de chaque tube verrouillable (20, 20', 120, 130), qui présente une section transversale globalement circulaire, ledit ou chaque plat coopérant exclusivement avec ladite ou chaque face plate (12a, 12b, 12a', 12b') du logement de verrouillage (12, 12', 112, 113, 112', 113', 112", 113") correspondant.

8. Dispositif de connexion (1, 1', 101, 101") selon une des revendications précédentes, **caractérisé en ce que** le ou chaque logement de verrouillage (12, 12', 112, 113, 112', 113', 112", 113") est ouvert sur un chant périphérique (15) de la bride (10, 10', 110, 110', 110") à la manière d'une entaille transversale formée dans ledit chant, de telle sorte que le ou chaque tube verrouillable (20, 20', 120, 130) soit mobile transversalement le long du logement de verrouillage correspondant.

9. Dispositif de connexion (1, 1') selon une des revendications précédentes, **caractérisé en ce que** l'un des deux tubes (20, 20' et 30) est un tube verrouillable (20, 20') via lesdits moyens de blocage en rotation coopérant avec le logement de verrouillage (12, 12'), et **en ce que** l'autre tube est un embout tubulaire (30) qui coopère avec l'autre logement (13), de section circulaire fermée, via des crans angulaires obtenus par des nervures axiales (32) formées sur cet autre tube et coopérant avec des rainures axiales (13a) formées sur cet autre logement, ou vice versa.

10. Dispositif de connexion (101, 101") selon les revendications 6 et 8, **caractérisé en ce que** la bride (110, 110', 110") présente deux logements de verrouillage (112 et 113, 112' et 113', 112" et 113") sensiblement homothétiques l'un de l'autre, par exemple identiques, qui sont chacun formés par ladite entaille et qui sont aptes à recevoir les deux tubes de verrouillage (120 et 130) incorporant chacun lesdits plats (122 et 123, 132 et 133) à ladite distance (d) de ladite collerette (131), de sorte à présenter sensiblement une forme de « H » dont les logements s'étendent de part et d'autre de la barre de liaison du « H ».

11. Dispositif de connexion selon la revendication 10, **caractérisé en ce que** chacun des deux jambages du « H » formé par ladite bride (110') présente deux extrémités (112a et 112b, 113a et 113b) qui sont déformées en étant localement recourbées vers l'autre jambage, de sorte à permettre un calage transversal plus ou moins serré des deux tubes verrouillables (120 et 130) dans leurs logements (112' et 113') respectifs.

12. Dispositif de connexion (101, 101") selon la revendication 10 ou 11, **caractérisé en ce que** la bride (110, 110', 110") est formée d'un extrudat métallique, les deux logements de verrouillage (112 et 113, 112' et 113', 112" et 113") qu'elle présente étant venus d'extrusion avec le reste de la bride.

13. Dispositif de connexion (1, 101, 101") selon une des revendications précédentes, **caractérisé en ce qu'**il est exclusivement constitué de trois pièces formées respectivement par la bride (10, 110, 110', 110") et les deux tubes (20, 20' et 30, 120 et 130) qui y sont insérés, l'un de ces tubes (20 ou 20') ou bien chacun d'eux (120 et 130) étant verrouillable en rotation dans son logement de verrouillage (12, 12', 112, 113, 112', 113', 112", 113") via le(s)dit(s) plat(s) (22, 23, 122, 123, 132, 133).

## Claims

1. Connection device (1, 1', 101, 101") for a climate-control or power-steering system of a motor vehicle, the device comprising a connection flange (10, 10', 110, 110', 110") and two tubes (20, 20' and 30, 120 and 130) having ends with a circular cross-section which are capable of being accommodated in two respective housings (12, 12' and 13, 112 and 113, 112' and 113', 112" and 113") of the flange and which are each provided with abutment means (21, 21' and 31, 131) for placing the corresponding tube in axial abutment against a stop face (14, 14') of the flange which is intended to be directed towards this system, at least one of the tubes or lockable tube (20, 20' 120, 130) being provided with means for blocking it in rotation in the corresponding housing or locking housing (12, 12', 112, 113, 112', 113', 112", 113") which extend before the abutment means and which comprise at least one flat portion (22, 23, 22', 23', 122, 123, 132, 133), in which the or each flat portion terminates at a distance (d) from the abutment means which, when measured in the axial direction of the or each lockable tube, is less than the axial thickness (e) of the flange, **characterised in that** the or each flat portion co-operates directly with a flat face (12a, 12b, 12a', 12b') of the corresponding locking housing which is integral with the flange, so as to rotationally block the or each lockable tube in this locking housing whilst allowing it to slide axially therein.

2. Connection device (1, 101, 101") according to claim 1, **characterised in that** the or each flat portion (22, 23, 122, 123, 132, 133) is extended axially by the abutment means (21, 131) so that the distance (d) is zero or substantially zero.

3. Connection device (1') according to claim 1, **characterised in that** the or each flat portion (22', 23') is extended axially by a connection portion (17) which is mounted axially beyond the flat face (12a', 12b') inside a widened portion of the corresponding locking housing (12') and which is extended by the abutment means (21').

4. Connection device (1, 1', 101, 101") according to any one of the preceding claims, **characterised in that** the or each flat portion (22, 23, 22', 23', 122, 123, 132, 133) extends over a portion (24, 124, 134) of the or each lockable tube (20, 20', 120, 130) having an axial length (L) which is greater than the axial thickness (e) of the flange (10, 10', 110, 110', 110").

5. Connection device (1, 1', 101, 101") according to claim 4, **characterised in that** the or each flat portion (22, 23, 22', 23', 122, 123, 132, 133) extends over a portion (24, 124, 134) of the or each lockable tube (20, 20', 120, 130) having an axial length (L) which is greater than the total, on the one hand, of the axial thickness (e) of the flange (10, 10', 110, 110', 110") and, on the other hand, of the axial length (l) of a rear portion (33) of the other tube (30) which extends beyond the abutment means (31, 131) and as far as the rear connection end (33a) of this other tube.

6. Connection device (1, 1', 101, 101") according to any one of the preceding claims, **characterised in that** the portion (24, 124, 134) has at least two parallel longitudinal flat portions (22 and 23, 22' and 23', 122 and 123, 132 and 133), which are axially separated, by the distance (d), from a peripheral collar (21, 21', 131) which forms the abutment means of the or each lockable tube (20, 20', 120, 130), and which co-operate directly with two respective flat faces (12a and 12b, 12a' and 12b') of the corresponding locking housing (12, 12', 112, 113, 112', 113', 112", 113") which has a substantially rectangular cross-section similar to the portion.

7. Connection device (1, 1', 101, 101") according to any one of the preceding claims, **characterised in that** the or each flat portion (22, 23, 22', 23', 122, 123, 132, 133) is formed integrally by means of forming with the remainder of the or each lockable tube (20, 20' 120, 130) which has a generally circular cross-section, the or each flat portion co-operating exclusively with the or each flat face (12a, 12b, 12a', 12b') of the corresponding locking housing (12, 12', 112, 113, 112', 113', 112", 113").

8. Connection device (1, 1', 101, 101") according to any one of the preceding claims, **characterised in that** the or each locking housing (12, 12', 112, 113, 112', 113', 112", 113") is open over a peripheral edge (15) of the flange (10, 10', 110, 110', 110") in the manner of a transverse indentation which is formed in the edge in such a manner that the or each lockable tube (20, 20', 120, 130) is transversely movable along the corresponding locking housing.

9. Connection device (1, 1') according to any one of the preceding claims, **characterised in that** one of the two tubes (20, 20' and 30) is a tube (20, 20') lockable via the rotational locking means which co-operate with the locking housing (12, 12'), and **in that** the other tube is a tubular end-piece (30) which co-operates with the other housing (13), having a closed circular cross-section, via angular notches which are obtained by means of axial ribs (32) which are formed on that other tube and which co-operate with axial grooves (13a) which are formed on that other housing, or vice-versa.

10. Connection device (101, 101") according to claims 6 and 8, **characterised in that** the flange (110, 110', 110") has two locking housings (112 and 113, 112' and 113', 112" and 113") which are substantially homothetic with each other, for example, identical, and which are each formed by the indentation and which are capable of receiving the two locking tubes (120 and 130) which each incorporate the flat portions (122 and 123, 132 and 133) at said distance (d) from the collar (131) so as to substantially have the shape of an "H", the housings of which extend at one side and the other of the connection bar of the "H".

11. Connection device according to claim 10, **characterised in that** each of the two legs of the "H" formed by the flange (110') has two ends (112a and 112b, 113a and 113b) which are deformed and locally curved towards the other leg, so as to allow tighter or less tight transverse adjustment of the two lockable tubes (120 and 130) in their respective housings (112' and 113').

12. Connection device (101, 101") according to claim 10 or claim 11, **characterised in that** the flange (110, 110', 110") is formed by a metal extrudate, the two locking housings (112 and 113, 112' and 113', 112" and 113") which it has being integrally extruded with the remainder of the flange.

13. Connection device (1, 101, 101") according to any one of the preceding claims, **characterised in that** it is exclusively constituted by three components which are formed by the flange (10, 110, 110', 110") and the two tubes (20, 20' and 30, 120 and 130), respectively, which are inserted therein, one of these tubes (20 or 20') or each of them (120 and 130) being lockable in rotation in the locking housing (12, 12', 112, 113, 112', 113', 112", 113") thereof via the flat portion(s) (22, 23, 122, 123, 132, 133).

## Patentansprüche

1. Verbindungsvorrichtung (1, 1', 101, 101") für einen Klimaanlagen- oder einen Lenkunterstützungskreislauf eines Kraftfahrzeuges, wobei die Vorrichtung einen Verbindungsflansch (10, 10', 110, 110', 110") und zwei Leitungen (20, 20' und 30, 120 und 130) mit einem an den Enden kreisartigen Querschnitt aufweist, die dazu eingerichtet sind, in zwei zugehörigen Aufnahmen (12, 12' und 13, 112 und 113, 112' und 113', 112" und 113") des Flansches angeordnet zu werden und die jeweils mit Mitteln (21, 21' und 31, 131) zum Überführen der zugehörigen Leitung in einen axialen Anschlag gegen eine Anschlagfläche (14, 14') des Flansches ausgestattet sind, die dazu bestimmt ist, diesem Kreislauf zugewandt zu sein, wobei wenigstens eine der Leitungen oder verriegelbaren Leitungen (20, 20', 120, 130) mit Mitteln zum Verhindern einer Drehung in der zugehörigen Aufnahme oder Verriegelungsaufnahme (12, 12', 112, 113, 112', 113', 112", 113") ausgestattet ist, die sich unterhalb der Mittel zum Überführen im Anschlag erstrecken, und die wenigstens eine Abflachung (22, 23, 22', 23', 122, 123, 132, 133) aufweisen, bei denen die oder jede Abflachung in einem Abstand (d) von den Mitteln zum Überführen in Anschlagenden, in axialer Richtung der oder jeder verriegelbaren Leitung gemessen, kleiner als eine axiale Dicke (e) des Flansches ist, **dadurch gekennzeichnet, dass** die oder jede Abflachung direkt mit einer Flachseite (12a, 12b, 12a', 12b') der zugehörigen Verriegelungsaufnahme zusammenwirkt, die aus einem Stück mit dem Flansch bereitgestellt ist, so dass eine Drehung der oder jeder verriegelbaren Leitung in der Verriegelungsaufnahme unter Gestatten ihres axialen Verschiebens in dieser blockiert ist.

2. Verbindungsvorrichtung (1, 101, 101") nach Anspruch 1, **dadurch gekennzeichnet, dass** die oder jede Abflachung (22, 23, 122, 123, 132, 133) durch die Mittel zum Überführen im Anschlag (21, 131) axial verlängert ist, so dass der Abstand (e) 0 oder beinahe 0 ist.

3. Verbindungsvorrichtung (1') nach Anspruch 1, **dadurch gekennzeichnet, dass** die oder jede Abflachung (22', 23') durch einen Verbindungsabschnitt (17) axial verlängert ist, der über die abgeflachte Seite (12a', 12b') hinaus in das Innere eines erweiterten Bereiches der zugehörigen Verriegelungsaufnahme (12') angebracht ist, und der durch die Mittel zum Überführen im Anschlag (21') verlängert ist.

4. Verbindungsvorrichtung (1, 1', 101, 101") nach einem der vorangehenden Ansprüche, **dadurch gekennzeichnet, dass** sich die oder jede Abflachung (22, 23, 22', 23', 122, 123, 132, 133) über einen Bereich (24, 124, 134) der oder jeder verriegelbaren Leitung (20, 20', 120, 130) mit einer axialen Länge (L) größer als die axiale Dicke (e) des Flansches (10, 10', 110, 110', 110") erstreckt.

5. Verbindungsvorrichtung (1, 1', 101, 101") nach Anspruch 4, **dadurch gekennzeichnet, dass** sich die oder jede Abflachung (22, 23, 22', 23', 122, 123, 132, 133) über einen Bereich (24, 124, 134) der oder jeder verriegelbaren Leitung (20, 20', 120, 130) mit einer axialen Länge (L) erstreckt, die zusammengenommen größer als zum einen die axiale Dicke (e) des Flansches (10, 10', 110, 110', 110") und zum anderen die axiale Länge (l) eines rückseitigen Teiles (33) der anderen Leitung (30) ist, die sich über die Mittel zum Überführen im Anschlag (31, 131) bis zum rückseitigen Verbindungsende (33a) dieser anderen Leitung erstreckt.

6. Verbindungsvorrichtung (1, 1', 101, 101") nach einem der vorangehenden Ansprüche, **dadurch gekennzeichnet, dass** der Abschnitt (24, 124, 134) wenigstens zwei in Längsrichtung parallele Abflachungen (22 und 23, 22' und 23', 122 und 123, 132 und 133) aufweist, die über einen umfänglichen Kragen (21, 21', 131) axial durch den Abstand (d) beabstandet sind, der die Mittel zum Überführen im Anschlag der oder jeder verriegelbaren Leitung (20, 20', 120, 130) bildet, und die direkt mit den jeweiligen abgeflachten Seiten (12a und 12b, 12a' und 12b') der zugehörigen Verriegelungsaufnahme (12, 12', 112, 113, 112', 113', 112", 113") zusammenwirkt, die einen verhältnismäßig genau rechteckigen Querschnitt wie der Abschnitt aufweist.

7. Verbindungsvorrichtung (1, 1', 101, 101") nach einem der vorangehenden Ansprüche, **dadurch gekennzeichnet, dass** die oder jede Abflachung (22, 23, 22', 23', 122, 123, 132, 133) einstückig über Formung mit dem übrigen Teil der oder jeder verriegelbaren Leitung (20, 20', 120, 130) gebildet ist, die einen insgesamt kreisartigen Querschnitt aufweist, wobei die oder jede Abflachung ausschließlich mit der oder jeder abgeflachten Seite (12a, 12b, 12a', 12b') der zugehörigen Verriegelungsaufnahme (12, 12', 112, 113, 112', 113', 112", 113") zusammenwirkt.

8. Verbindungsvorrichtung (1, 1', 101, 101") nach einem der vorangehenden Ansprüche, **dadurch gekennzeichnet, dass** die oder jede Verriegelungsaufnahme (12, 12', 112, 113, 112', 113', 112", 113") an einer umfänglichen Kante (15) des Flansches (10, 10', 110, 110', 110") nach Art einer in dieser Kante ausgebildeten Querausnehmung geöffnet ist, so dass die oder jede verriegelbare Leitung (20, 20', 120, 130) in Querrichtung entlang der zugehörigen Verriegelungsaufnahme beweglich ist.

9. Verbindungsvorrichtung (1, 1') nach einem der vorangehenden Ansprüche, **dadurch gekennzeichnet, dass** eine der beiden Leitungen (20, 20' und 30) eine verriegelbare Leitung (20, 20') ist, über die die Mittel zum Verhindern einer Drehung mit der Verriegelungsaufnahme (12, 12') zusammenwirken, und dass die andere Leitung ein rohrartiges Endstück (30) ist, das mit der anderen Aufnahme (13) mit einem geschlossenen kreisartigen Querschnitt zusammenwirkt, und zwar über Sicherungsecken, die durch in dieser anderen Leitung ausgebildete axiale Rippen (32) und mit in der anderen Aufnahme ausgebildeten axialen Nuten (13a), oder umgekehrt, zusammenwirkt.

10. Verbindungsvorrichtung (101, 101") nach den Ansprüchen 6 und 8, **dadurch gekennzeichnet, dass** der Flansch (110, 110', 110") zwei Verriegelungsaufnahmen (112 und 113, 112' und 113', 112" und 113") aufweist, die einander im Wesentlichen ähnlich beispielsweise identisch sind, die jeweils durch die Ausnehmung gebildet und dazu eingerichtet sind, die beiden Verriegelungsleitungen (120 und 130) aufzunehmen, die jeweils die Abflachungen (122 und 123, 132 und 133) im Abstand (d) von dem Kragen (131) aufweisen, so dass er im Wesentlichen die Gestalt eines "H" aufweist, wobei sich die Aufnahmen beidseitig des Verbindungsstückes des "H" erstrecken.

11. Verbindungsvorrichtung nach Anspruch 10, **dadurch gekennzeichnet, dass** jeder der Schenkel des "H", das durch den Flansch (110') gebildet ist, zwei Enden (112a und 112b, 113a und 113b) aufweist, die durch lokales Umbiegen in Richtung des anderen Schenkels verformt sind, so dass eine mehr oder weniger starke Querverkeilung der beiden verriegelbaren Leitungen (120 und 130) in ihren jeweiligen Aufnahmen (112' und 113') erzielt ist.

12. Verbindungsvorrichtung (101, 101 ") nach Anspruch 10 oder 11, **dadurch gekennzeichnet, dass** der Flansch (110, 110', 110") aus einem metallischen Extrudat gebildet ist, wobei die Verriegelungsaufnahmen (112 und 113, 112' und 113', 112" und 113"), die er aufweist, mit dem übrigen Teil des Flansches durch Extrudieren hergestellt sind.

13. Verbindungsvorrichtung (1, 101, 101") nach einem der vorangehenden Ansprüche, **dadurch gekennzeichnet, dass** sie insgesamt durch drei Teile gebildet ist, nämlich durch den Flansch (10, 110, 110', 110") und die beiden Leitungen (20, 20' und 30, 120 und 130), die dort eingefügt sind, wobei eine der Leitungen (20 oder 20') beziehungsweise jeweils beide (120 und 130) bezüglich Drehung in ihrer Verriegelungsaufnahme (12, 12', 112, 113, 112', 113', 112", 113") über die Abflachung(en) (22, 23, 122, 123, 132, 133) verriegelbar sind.
